# EUROPÄISCHE PATENTSCHRIFT

(11) **EP 1 812 339 B1**
(45) Veröffentlichungstag und Bekanntmachung des Hinweises auf die Patenterteilung: **23.04.2008**
(21) Anmeldenummer: 05802286.4
(22) Anmeldetag: 10.11.2005
(51) Int. Cl.: C01B 9/00, C01B 9/02, C01B 9/04, C01B 9/06, C01B 9/08, B01J 19/12, C01B 33/107, C01B 35/06, C01F 7/48, C01F 7/50, C01F 7/56, C01F 7/64, C01G 27/04, C01G 49/10

(54) **VERFAHREN ZUR HERSTELLUNG VON ELEMENTHALOGENIDEN**
PROCESS FOR PREPARING ELEMENT HALIDES
PROCEDE DE PRODUCTION D'HALOGENURES ELEMENTAIRES

(30) Priorität: 18.11.2004 DE 102004055687; 25.05.2005 DE 102005024104
(43) Veröffentlichungstag der Anmeldung: 01.08.2007
(73) Patentinhaber: Wacker Chemie AG, 81737 München (DE)
(72) Erfinder: AUNER, Norbert, 61479 Glashütten (DE)
(74) Vertreter: Fritz, Helmut
(86) Internationale Anmeldenummer: PCT/EP2005/012052
(87) Internationale Veröffentlichungsnummer: WO 2006/053676

(56) Entgegenhaltungen:
- EP-A- 0 167 156
- DE-A1- 3 442 370
- US-A- 2 954 274
- US-A- 3 173 760
- US-A- 4 327 062
- PATENT ABSTRACTS OF JAPAN Bd. 011, Nr. 371 (C-462), 3. Dezember 1987 (1987-12-03) & JP 62 143813 A (JGC CORP), 27. Juni 1987 (1987-06-27) in der Anmeldung erwähnt

## Beschreibung

Es wird ein Verfahren zur Darstellung von Elementhalogeniden beschrieben, das dadurch gekennzeichnet ist, dass in einem ersten Schritt eine Mischung aus einem Material enthaltend das jeweilige Element und Kohlenstoff oder kohlenstoffhaltigem Material hergestellt wird und diese Mischung mit einem unter den gewählten Reaktionsbedingungen gasförmigen Halogen, Halogenwasserstoff oder deren Gemischen in Kontakt gebracht und erhitzt wird, wobei die Energiezufuhr durch ein elektromagnetisches Wechselfeld erfolgt.

Elementhalogenide sind Verbindungen von Elementen mit den Halogenen Fluor, Chlor, Brom, Iod oder Mischungen dieser Halogene. Die Element-Halogen-Bindung kann hierbei ionogenen Charakter, wie zum Beispiel eine Halogen-Alkalimetall-Bindung, wie beispielsweise NaCl, oder überwiegend kovalenten Charakter wie für Metall-Halogen-Bindungen, wie beispielsweise SiCl₄, oder auch Nichtmetall-Halogen-Bindungen, wie beispielsweise PCl₃, aufweisen.

Elementhalogenide werden in der Technik vielseitig eingesetzt. Einige Elemente wie beispielsweise Aluminium, Titan, Bor oder Silicium werden aus Elementhalogeniden gewonnen. Auch dient bei einigen Elementen eine halogenierende Oxidation und eine anschließende dehalogenierende Reduktion zur Darstellung dieser Elemente in besonders hoher Reinheit. Gegebenenfalls können die Elementhalogenverbindungen hierbei durch Sublimation, wie beispielsweise AICl₃, oder Destillation, wie beispielsweise TiCl₄, zusätzlich aufgereinigt werden. Die Dehalogenierung kann beispielsweise mittels Wasserstoff, wie beispielsweise BCl₃, oder durch thermische Zersetzung erfolgen, wie beispielsweise Zersetzung von BBr₃ an Wolfram-Draht. Hierdurch werden Elementhalogenide auch zu wichtigen Ausgangssubstanzen für CVD- oder ähnliche Prozesse. Weiter sind Elementhalogenide grundlegende Bausteine beispielsweise für technisch und synthetisch wichtige Katalysatoren, wie beispielsweise Friedel-Crafts-Katalysatoren zur elektrophilen Aromatensubstitution, Alkylierung, Acylierung oder Ziegler-Natta-Katalysatoren für Polymerisationen, zur Ausbildung von Element-Element-Bindungen, wie beispielsweise durch Wurtzkupplungen, Grignard-Reaktionen, Salzmetathese zu Element-Sauerstoff-, Element-Phosphor-, Element-Stickstoff-, Element-Bor-, Element-Schwefel-Bindungen, und Zwischenprodukte sowie Hilfsmittel, wie beispielsweise AlCl₃ in Pharmaka, Kosmetika, Textilien oder als Flockungshilfsmittel bei der Wasseraufbereitung. Als technisch besonders relevante Elementhalogenide sollen Tetrachlortitan und -silan als Zwischenprodukte der Titandioxidproduktion sowie der Herstellung von hochdisperser Kieselsäure hervorgehoben werden.

Im Stand der Technik sind unterschiedliche Verfahren zur Darstellung von Elementhalogeniden bekannt, die sich zu mehreren Gruppen zusammenfassen lassen.

Alle bekannten Elementhalogenide lassen sich durch Umsetzung der Elemente mit dem jeweiligen Halogen, gegebenenfalls unter Erwärmen, erzeugen. Von einigen Elementen ist auch eine Umsetzung mit Halogenwasserstoff bekannt, wobei im Allgemeinen zusätzlich Wasserstoff freigesetzt wird. In dieser reduktiv wirkenden Atmosphäre werden die Elementhalogenide zumeist in einer vergleichsweise niedrigen Oxidationsstufe erhalten. Um zu Elementhalogeniden in einer höheren Oxidationsstufe zu gelangen, ist es in einigen Fällen möglich, diese mit Halogen anstelle von Halogenwasserstoff umzusetzen oder die niederen Elementhalogenide nachträglich mit Halogen, insbesondere Chlor, zu oxidieren. Auch ist es möglich, Elementhalogenide einer hohen Oxidationsstufe mit Wasserstoff oder ähnlichen reduktiv Halogen entziehend wirkenden Reagenzien in eine niedrigere Oxidationsstufe zu überführen.

Beispiele für derartige Umsetzungen sind:

Fe + 2 HCl → FeCl₂ + H₂

2 Fe + 3 Cl₂ → 2 FeCl₃

PCl₃ + Cl₂ → PCl₅

2 BCl₃ + "Chlor entziehendes Reagenz" → B₂Cl₄

Wobei in der letztgenannten Gleichung das Chlor entziehende Reagenz Kupfer oder Quecksilber sein kann.

Ein weiteres bekanntes Verfahren ist die Carbochlorierung. Mit "Carbochlorierung" wird eine Umsetzung von bevorzugt Elementoxiden mit Kohlenstoff und Chlor unter Zuführung thermischer Energie bezeichnet. Für einige Elemente ist auch eine Carbochlorierung mit Chlorwasserstoff bekannt.

Derartige Reaktionen werden beispielsweise in den Patentschriften JP62-143813 A2 und US 4,576,812 beschrieben:

TiO₂ + 2 Cl₂ + 2 C → TiCl₄ + 2 CO

Al₂O₃ + 3 Cl₂ + 3 C → 2 AlCl₃ + 3 CO

BaSO₄ + C + Cl₂ → BaCl₂ + CO₂ + SO₂

Ein Verfahren, das sich an die Carbochlorierung anlehnt, ist die chlorierende Röstung. Bei der chlorierenden Röstung werden Elementverbindungen mit chlorhaltigen Verbindungen gemischt und gegebenenfalls in Anwesenheit von Kohlenstoff oder kohlenstoffhaltigen Verbindungen erhitzt. Verwendete chlorhaltige Verbindungen sind beispielsweise Tetrachlorsilan oder -kohlenstoff, Natriumchlorid oder chlorhaltige SchwefelVerbindungen wie Thionyl- und Sulfurylchlorid.

So lassen sich gemäß H. F. Johnstone et al, in Ind. engg. Chem. 34 (1942) 280, Mischungen von Chromeisenstein mit Natrium- oder Kaliumchlorid mit einem Schwefeldioxid/Luft-Gemisch zu wasserlöslichen Chloriden und Sulfaten umsetzen. Rauter (Liebigs Ann. 270, 1892, 236) beschreibt die Umsetzung von Cadmiumoxid mit Siliciumtetrachlorid zu Cadmiumchlorid:

2 CdO + SiCl₄ → 2 CdCl₂ + SiO₂.

Ebenso kann Cadmiumchlorid aus Cadmiumoxid gemäß:

CdO + SOCl₂ → CdCl₂ + SO₂

mittels des von North und Hagemann in J. Am. Chem. Soc. 35 (1913) 2088 beschriebenen Verfahrens erhalten werden. Die Patentschriften US 2,895,796 und US 3,652,219 offenbaren beispielsweise ein Verfahren zur Herstellung von Eisen(II)chlorid aus Eisensulfid gemäß:

FeS₂ + SCl₂ → FeCl₂ + 3 S.

Weiterhin wird beispielsweise in den Patentschriften US 4,209,501 und US 4,576,812 ein Verfahren zur Herstellung von Eisen(II)chlorid aus Eisen(III)chlorid gemäß:

ZnS + 2 FeCl₃ → ZnCl₂ + 2 FeCl₂ + S

beschrieben.

Zuletzt erwähnt sei die direkte Umsetzung von Elementverbindungen mit Halogenwasserstoffen unter Bildung von Elementhalogeniden und Freisetzung von Wasserstoffverbindungen gemäß den nachfolgenden Beispielen:

SiO₂ + 4 HF→ SiF₄ + 2H₂O,

As₂O₃ + HCl → AsCl₃ + H₂O

und

SnS + 2 HCl → SnCl₂ + H₂S.

Im Stand der Technik sind unterschiedliche Ausführungsformen zur Darstellung von Elementhalogeniden bekannt. Ein häufig in vergleichbarer Weise angewendetes und beispielsweise in der Patentschrift US 4,083,923 beschriebenes Verfahren setzt unter den Reaktionsbedingungen feste Ausgangsverbindungen zu unter den Reaktionsbedingungen gasförmigen Elementhalogeniden um, ein beispielsweise in der Patentschrift US 4,576,812 offenbartes Verfahren gelangt von festen Ausgangsmaterialien zu unter den Reaktionsbedingungen festen Elementhalogeniden. Es sind des weiteren Verfahren bekannt, bei denen die Umsetzung der Ausgangsverbindungen in flüssiger Phase oder einer Suspension stattfindet, etwa in einer Salzschmelze. Ein beispielsweise in der Patentschrift US 4,039,648 offengelegtes Verfahren führt dabei zu unter den Reaktionsbedingungen gasförmigen Elementhalogeniden, während beispielsweise in den Patentschriften US 4,209,501 oder US 4,597,840 beschriebene Verfahren in der flüssigen Phase gelöste Produkte erzeugen.

Im Stand der Technik sind auch Umsetzungen von Gemischen unterschiedlicher Elementverbindungen beschrieben, wie beispielsweise von Tonerden oder Bauxit, wobei Gemische von Elementhalogeniden entstehen, die nachfolgend durch fraktionierte Kondensation, Filtration oder Destillation aufgereinigt werden können. Zusätzlich beschreiben beispielsweise in den Patentschriften US 3,935,297, US 4,083,923 oder W02004/063096 offenbarte Verfahren die Möglichkeit, Verunreinigungen im gewünschten Zielprodukt durch selektive Abreaktion zu entfernen.

Die im Stand der Technik beschriebenen Verfahren, welche nicht von den Elementen ausgehen, weisen dabei teilweise den Nachteil auf, dass sie das enthaltene Element nur zu einem geringen Anteil in Elementhalogenide überführen. Um die Ausbeuten zu erhöhen oder die Reaktionsgeschwindigkeiten zu verbessern, werden oftmals Katalysatoren eingesetzt, wie beispielsweise in den Patentschriften US 1,565,220 durch Zusatz von Schwefel bei der Carbochlorierung von Tonerde zur Reaktionsbeschleunigung und US 4,083,927 durch Zusatz von BCl₃ bei der Carbochlorierung von Kaolin-haltigen Rohstoffen, um die Reaktion zu AlCl₃ gegenüber der zu SiCl₄ zu beschleunigen, beschrieben. Weiterhin entstehen bei diesen Verfahren zum Teil arbeitsmedizinisch und umwelttoxikologisch bedenkliche Nebenprodukte. So kann etwa die Carbochlorierung von Elementoxiden mit Chlorgas Dichlorketon (Phosgen) erzeugen. Um die Freisetzung von Phosgen zu minimieren, muss das eingesetzte Chlorgas im Reaktor möglichst vollständig umgesetzt werden, wie beispielsweise in den Patentschriften JP60-112610 A2 und JP60-118623 A2 beschrieben:

SiO₂ + 2C + 2Cl₂ → SiCl₄ + 2CO

CO + Cl₂ → COCl₂

DE-A-3442370 offenbart ein weiteres Verfahren zur Herstellung von Siliciumtetrachlorid. In diesem Verfahren werden Siliciumdioxid, Kohlenstoff und Chlor bei Temperaturen von mindestens 1000°C umgesetzt.

Der vorliegenden Erfindung liegt die Aufgabe zugrunde, ein Verfahren zur Herstellung von Elementhalogeniden zu schaffen, das sich in Bezug auf die eingesetzten Ausgangsstoffe durch eine besonders große Vielseitigkeit auszeichnet und ohne Zusatz von Katalysatoren abläuft.

Diese Aufgabe wird erfindungsgemäß durch ein Verfahren zur Herstellung von Elementhalogenid, dadurch gekennzeichnet, dass eine Mischung eines Materials enthaltend das Element mit Kohlenstoff oder kohlenstoffhaltigem Material unter Erwärmen mittels Einwirkung eines elektromagnetischen Wechselfeldes mit einem Gasstrom enthaltend unter den Reaktionsbedingungen gasförmiges Halogen oder eine gasförmige Halogenverbindung oder deren Gemischen in Kontakt gebracht wird, gelöst.

Erfindungsgemäß wurde festgestellt, dass bei Verwendung eines elektromagnetischen Wechselfeldes, bevorzugt Mikrowellenstrahlung, als Energiequelle zur Durchführung des erfindungsgemäßen Verfahrens auf beliebige das Element enthaltende Verbindungen zurückgegriffen werden kann, wobei das erfindungsgemäße Verfahren nicht nur in Bezug auf die Art des verwendeten Materials enthaltend das Element, sondern auch in Bezug auf die spezifische Oberfläche dieses Materials keinen Beschränkungen ausgesetzt ist. Auch in Bezug auf die Art und die spezifische Oberfläche des verwendeten Kohlenstoffs oder kohlenstoffhaltigen Materials bestehen kaum Beschränkungen. Der verwendete Kohlenstoff oder das Kohlenstoff enthaltende Material muss hierbei in einer Form vorliegen, die geeignet ist elektromagnetische Wellen in thermische Energie umzusetzen, d.h. von elektromagnetischen Wechselfeldern thermisch angeregt zu werden.

Zur Durchführung des erfindungsgemäßen Verfahrens ist kein Katalysator erforderlich, während dies im Stand der Technik oftmals der Fall ist.

Das Verfahren der vorliegenden Erfindung erhebt keinerlei Ansprüche an das eingesetzte elementhaltige und kohlenstoffhaltige Material. Bevorzugt werden jedoch Elementoxide oder Elementsulfide sowie Mischungen dieser Oxide oder Sulfide mit verunreinigenden Verbindungen, insbesondere mit einem möglichst hohen Elementgehalt, verwendet. Als nicht einschränkende Beispiele verwertbarer Mischungen seien genannt titanhaltige Abfälle der Titandioxid-Herstellung, siliciumhaltige Abfälle wie Reisasche und kohlenstoffhaltige Rückstände von Verbrennungs- oder Pyrolyseprozessen. Diese Materialien sind zur Zeit Problemstoffe, die aufwändig deponiert werden müssen. Möglich ist auch ein Recycling von Gläsern, der Aufschluss von aluminiumhaltigen Silicaten oder Mischungen aus Aluminiumoxiden mit Siliciumoxid und Eisenoxiden, wie beispielsweise Bauxit.

Einige geeignete Ausgangsmaterialien sind in Tabelle 1 aufgeführt.

**Tabelle 1**

| **Element** | **Quelle** |
|---|---|
| Fe | Fe₂O₃, FeO, Fe₃O₄, Eisenerze |
| Ti | TiO₂, Ilmenit |
| Si | Wüstensand, Quarz, Glimmer, Reisasche, Quarzglas, Fensterglas, Bierflaschen, hochdisperse Kieselsäure, Quarzsand, Duranglas, Siliciumcarbid, Siliciumnitrid |
| Al | Al₂O₃, Bauxit |
| P | Ca₃(PO₄)₂ |
| B | B₂O₃ |
| Hf | HfO₂ |
| C | Aktivkohle, Steinkohle, Braunkohle, Petrokoks |

Die Elementhalogenide können gegebenenfalls nach der Halogenierung der Mischungen durch bekannte physikalische oder chemische Verfahren getrennt werden, beispielsweise durch Destillation von flüssigen oder gasförmigen Elementhalogeniden, durch Sublimation von festen Elementhalogeniden oder Filtration zur Trennung von flüssigen oder gasförmigen Elementhalogeniden von festen Elementhalogeniden.

Auch ist eine Umsetzung von Ausgangsmaterialien oder deren Mischungen möglich, die die Elemente in bestimmten Verhältnissen enthalten. Hierdurch kann beispielsweise ein Dotierungsverhältnis für einen nachfolgenden Abscheidungsprozess voreingestellt werden.

In dem erfindungsgemäßen Verfahren können Elementhalogenide dargestellt werden, die unter den Reaktionsbedingungen flüssig, gasförmig oder fest sind. Somit zeichnet sich das Verfahren durch besonders große Vielseitigkeit aus.

Das Verfahren kann mit einer Abscheidung der Elementhalogenide mittels Wasserstoff gekoppelt sein. Der während der Verwendung von Halogenwasserstoff zur Halogenierung entstehende Wasserstoff kann hierzu eingesetzt werden.

Der freigesetzte Wasserstoff kann alternativ zur Gewinnung eines Teiles der für den Prozess benötigten Energie genutzt werden. Im Vergleich zu Verfahren, in denen eine Halogenierung aus den Elementen erfolgt, können mit dem hier vorgestellten einstufigen Verfahren Energie und Produktionskosten eingespart werden. Die Herstellung des Elements entfällt. Formal verläuft der Prozess oftmals ohne Änderung der Oxidationsstufe des Elements.

Der verwendete Kohlenstoff oder das verwendete kohlenstoffhaltige Material kann im erfindungsgemäßen Verfahren zusätzlich zu seiner Wirkung als Heizelement zur thermischen Anregung durch das elektromagnetische Wechselfeld, wie beispielsweise Mikrowellenstrahlung, auch als Reagenz zur Reduktion dienen.

In einer besonders bevorzugten Variante der vorliegenden Erfindung wird als halogenhaltige Verbindung Chlorwasserstoff eingesetzt. Neben der Vermeidung von Phosgen ist Chlorwasserstoff auch aufgrund seines wesentlich niedrigeren Siedepunktes im Vergleich zu Chlor technologisch zu bevorzugen, da er einfacher von den gewünschten Elementhalogeniden zu trennen ist. Für den Reaktorbau ist Chlorwasserstoff ebenfalls von Vorteil, da Chlorwasserstoff im Vergleich zu Chlor weniger oxidativ auf die Reaktormaterialien einwirkt.

Die Verwendung von Halogenwasserstoff für die Umsetzung von insbesondere Elementoxiden hat den Nachteil, dass aufgrund des an das Halogen gebundenen Wasserstoffes während der Durchführung der Reaktion Wasser gebildet wird, welches ein erzeugtes hydrolyseempfindliches Elementhalogenid wieder hydrolysieren kann. In Weiterbildung des erfindungsgemäßen Verfahrens kann während der Darstellung von hydrolyseempfindlichen Elementhalogeniden, wie beispielsweise Tetrachlortitan durch Wahl einer geeigneten Temperatur, bevorzugt über 800°C, das Wassergas-Gleichgewicht: 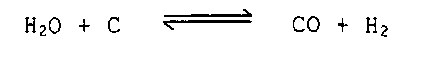 zugunsten von Kohlenmonoxid und Wasserstoff verschoben werden. Das Wasser wird dem Gleichgewicht entzogen und Hydrolyse findet nicht statt. Das hierbei entstandene Kohlenmonoxid-Wasserstoff-Gemisch kann energetisch oder chemisch genutzt werden.

Das erfindungsgemäße Verfahren ist nicht nur in Bezug auf die Art des verwendeten Materials enthaltend das Element, sondern auch in Bezug auf die spezifische Oberfläche dieses Materials keinen Beschränkungen ausgesetzt. Auch in Bezug auf die Art und die spezifische Oberfläche des verwendeten Kohlenstoffs oder kohlenstoffhaltigen Materials bestehen kaum Beschränkungen.

Vorzugsweise werden für das erfindungsgemäße Verfahren Ausgangsmaterialien gewählt, die sich technisch leicht vermischen lassen. Dies können beispielsweise Mahlprodukte der das Element enthaltenden bzw. Kohlenstoff enthaltenden Materialien sein, die getrennt oder bereits vorgemischt einem Mahlprozess unterzogen werden. In einer weiteren Ausführungsform können die Bestandteile des Gemisches oder das Gemisch selbst porös sein. Besonders bevorzugt sollte das Gemisch einen solch großen Porenraum besitzen, dass es vom gasförmigen Halogen oder der gasförmigen Halogenverbindung durchdrungen werden kann, um auf diese Weise die stattfindende Reaktion zu fördern. Mit dem erfindungsgemäßen Verfahren können auch kompakte Materialien mit geringer spezifischer Oberfläche, beispielsweise grob zerkleinerte natürliche Mineralien, wie beispielsweise Bauxit, Ilmenit, Quarz oder Sand, umgesetzt werden.

Der in dem erfindungsgemäßen Verfahren eingesetzte Kohlenstoff bzw. das entsprechende kohlenstoffhaltige Material wirkt einerseits als Heizelement innerhalb der Mischung, andererseits gegebenenfalls auch als Reduktionsmittel. Desweiteren fängt der verwendete Kohlenstoff Wasser durch Reduktion zu Wasserstoff ab und verhindert auf diese Weise, dass sich Wasser, das beispielsweise durch die Ausgangsmaterialien eingetragen werden kann oder bei der Reaktion freigesetzt wird, nachteilig auf die Herstellung von hydrolyseempfindlichen Elementhalogeniden auswirkt.

Das Elementhalogenid kann nahezu quantitativ gewonnen werden. Bei dem erfindungsgemäßen Verfahren kann jede beliebige das Element enthaltende Verbindung eingesetzt werden.

In allen Ausführungsformen des erfindungsgemäßen Verfahrens können Katalysatoren zur Reaktionsmischung zugefügt werden, um die Reaktionsgeschwindigkeiten zu erhöhen oder die Selektivität bezüglich des gewünschten Elementhalogenids zu verbessern, insbesondere wenn verunreinigte elementhaltige Verbindungen im erfindungsgemäßen Verfahren eingesetzt werden. Die Katalysatoren können bereits vor Eintritt in den Reaktor in die Reaktionsmischung eingebracht werden, als Feststoffe, Flüssigkeiten oder Gase separat während der Reaktion zugeführt werden oder als Gas im Gemisch mit dem Halogenwasserstoff in den Reaktionsraum gelangen.

In einer ersten Ausführungsform des erfindungsgemäßen Verfahrens wird das Element enthaltende Material vorzugsweise in Form von Partikeln, wie beispielsweise Pulver, Körner, Kugeln oder Granulate, verwendet, um eine gute Hindurchleitung des gasförmigen Halogens bzw. der gasförmigen Halogenverbindung zu ermöglichen.

Ein bevorzugtes Molverhältnis von Element zu Kohlenstoff lässt sich nicht allgemeingültig definieren, da sich das Verfahren in mehrere Teilbereiche gliedert, die zur quantitativen Erzeugung des gewünschten Elementhalogenids unterschiedliche Mindestmengen an Kohlenstoff erfordern:
1. Umsetzungen, bei denen Kohlenstoff nicht als Reduktionsmittel gegen die elementhaltige Verbindung wirkt; der Kohlenstoff oder das kohlenstoffhaltige Material werden nur durch Abreaktion mit Verunreinigungen oder mit Nebenprodukten der Halogenierung verbraucht und wirken hauptsächlich als Füllstoff und als Heizelement. Daher muss zur Erzeugung einer homogenen Reaktionsmischung nur immer wieder ein Vermischen mit dem ergänzten elementhaltigen Ausgangsmaterial erfolgen. Das Molverhältnis Element zu Kohlenstoff beträgt hierbei vorzugsweise 100:1 bis 1:2.
2. Kohlenstoff dient als Reduktionsmittel reiner Elementverbindungen, hier muss genügend Kohlenstoff vorhanden sein, um die stöchiometrische Abreaktion des Elementes zu gewährleisten. Damit beständig Wärme erzeugt werden kann ist ein Überschuss zur Stöchiometrie vorteilhaft. Das Molverhältnis Element zu Kohlenstoff beträgt hier bevorzugt 1:1 bis 1:10.
3. Kohlenstoff wird zur Reduktion von verunreinigten Elementverbindungen eingesetzt. In diesem Fall muss nicht nur genügend Kohlenstoff vorhanden sein, um das gewünschte Elementhalogenid zu erzeugen, sondern es müssen, wenn eine vollständige Umsetzung des Ausgangsmaterials gewünscht ist, auch die Verunreinigungen quantitativ abreagiert werden können; eine selektive Reaktion ist natürlich ebenfalls denkbar, insbesondere wenn etwa in Anlehnung an die Patentschrift US 4,083,927 in der Durchführung des erfindungsgemäßen Verfahrens Katalysatoren Verwendung finden.

In diesem dritten Fall beträgt das Molverhältnis Kohlenstoff zu allen erzeugten Halogenidverbindungen bevorzugt 10:1 bis 1:1.

Die Reaktionstemperaturen betragen für die Darstellung von hydrolyseempfindlichen Elementhalogeniden bevorzugt mehr als 700°C, besonders bevorzugt mehr als 800°C.

Das verwendete Halogengas ist vorzugsweise Chlor. Bei einer weiteren Ausführungsform des erfindungsgemäßen Verfahrens findet als gasförmige Halogenverbindung Halogenwasserstoffgas, vorzugsweise Chlorwasserstoffgas (HCl), Verwendung. Fluorwasserstoff (HF) kann ebenfalls eingesetzt werden. Das halogenhaltige Gas kann in reiner Form oder zusammen mit einem Trägergas verwendet werden. Als Trägergas werden CO₂ oder inerte Gase ausgewählt aus der Gruppe enthaltend Helium, Stickstoff und Argon sowie deren Gemische bevorzugt.

In einer bevorzugten Ausführungsform wird Siliciumtetrahalogenid nahezu quantitativ gewonnen. Bei dem erfindungsgemäßen Verfahren kann nahezu jede beliebige SiOₓ-Quelle eingesetzt werden, wobei x eine Zahl von 1 bis 2 bedeutet. Zweckmäßigerweise findet SiO₂ Verwendung, wobei jedoch auch eine Verwendung von SiO und/oder Gemischen aus beiden möglich ist. Geeignete SiOₓ-Quellen sind beispielsweise Sand, wie beispielsweise Wüsten- oder Quarzsand, Glas, Reisasche und Silikate. Es können daher sämtliche Materialien Verwendung finden, die aus SiOₓ bestehen oder SiOₓ enthalten, auch entsprechende Silikate.

In einer besonders bevorzugten Ausführungsform des erfindungsgemäßen Verfahrens wird als geeignete Quelle für SiOx beispielsweise Wüstensand eingesetzt, da dieser in großen Mengen zur Verfügung steht. Ein derartiger Wüstensand besitzt in der Regel einen SiO₂-Anteil von größer 80%.

Beispielhafte Zusammensetzungen von Wüstensand sind in der nachfolgenden Tabelle 2 aufgeführt (Angaben in %):

**Tabelle 2: Prozentuale Zusammensetzung von Wüstensand**

| Wüstensand aus Abu Dhabi | | |
|---|---|---|
| | weißer Sand | roter Sand |
| Fe₂O₃ | 0,32 | 1,21 |
| TiO₂ | 0,05 | 0,06 |
| CaO | 11,6 | 9,8 |
| K₂O | 0,91 | 1,12 |
| MgO | 1,08 | 3,40 |
| Na₂O | 0,59 | 0, 51 |
| P₂O₅ | 0,05 | 0,02 |
| Al₂O₃ | 1,62 | 2,12 |
| SiO₂ | 83,8 | 81,8 |

SiOx bzw. das SiOₓ-enthaltende Material wird vorzugsweise in Form von Partikeln, wie beispielsweise Pulver, Körner, Kugeln oder Granulate, verwendet, um eine gute Vermischung und eine gute Hindurchleitung des gasförmigen Halogens bzw. der gasförmigen Halogenverbindung zu ermöglichen.

Das Molverhältnis SiOₓ zu Kohlenstoff beträgt vorzugsweise 1:1 bis 1:10, besonders bevorzugt 1:2 bis 1:7. Da der Kohlenstoff nicht nur als Reduktionsmittel sondern auch als Heizelement wirkt, ist eine überstöchiometrische Zugabe vorteilhaft.

Bei der Herstellung von Siliciumhalogeniden ist das vorzugsweise verwendete Halogengas Chlor. Weiter bevorzugt wird Fluor. Das gasförmige Halogen, der gasförmige Halogenwasserstoff oder deren Gemische können dabei in reiner Form oder zusammen mit einem Trägergas eingesetzt werden. Als Trägergas werden inerte Gase ausgewählt aus der Gruppe enthaltend Helium, Stickstoff und Argon sowie deren Gemische bevorzugt.

In einer weiteren bevorzugten Ausführungsform wird dem Halogen, Halogenwasserstoff oder deren Gemische sowie gegebenenfalls Trägergas Wasserstoff zugeführt, wobei halogenierte Silane HₐSiX₄₋ₐ entstehen, wobei a eine ganze Zahl von 0 bis 3 und X ein Halogen bedeuten.

Bei einer weiteren Ausführungsform des erfindungsgemäßen Verfahrens zur Herstellung von Siliciumtetrahalogeniden findet als gasförmige Halogenverbindung Halogenwasserstoffgas, vorzugsweise Chlorwasserstoffgas (HCl), Verwendung. Fluorwasserstoff (HF) kann ebenfalls eingesetzt werden.

Bei der erfindungsgemäßen Umsetzung von Materialien enthaltend SiOₓ mit einem Halogengas (X₂) in Gegenwart von den Kohlenstoff- oder Kohlenstoff enthaltenden Partikeln werden Siliciumtetrahalogenide (SiX₄) sowie Kohlenmonoxid (CO), das mit Kohlendioxid (CO₂) im thermodynamischen Gleichgewicht steht, gebildet.

Bei der erfindungsgemäßen Umsetzung von Materialien enthaltend SiOₓ mit Halogenwasserstoff in Gegenwart von Kohlenstoff- oder Kohlenstoff enthaltenden Materialien werden halogenierte Silane HₐSiX₄₋ₐ, wobei a eine ganze Zahl von 0 bis 3 und X ein Halogen bedeuten, sowie gegebenenfalls Wasserstoff und Kohlenmonoxid CO, das mit Kohlendioxid CO₂ im thermodynamischen Gleichgewicht steht, gebildet.

Der als Wärmeüberträger sowie gegebenenfalls als Reduktionsmittel zur Darstellung von Elementhalogeniden benötigte Kohlenstoff oder das entsprechende kohlenstoffhaltige Material wird vorzugsweise ebenfalls partikulär, beispielsweise in Form von Pulver, Körnern, Kugeln oder Granulaten, verwendet, um ein gutes Vermischen und eine gute Hindurchleitung des Halogengases oder der Halogenverbindung zu ermöglichen. Die Art des verwendeten Materials ist nicht kritisch.

Pelletieren oder Granulieren der Mischung aus Elementverbindung und kohlenstoffhaltigem Material führt zu einem besonders innigen Kontakt zwischen den beiden Komponenten und erlaubt gleichzeitig aufgrund der Porosität der aus den Pellets oder Granalien gebildeten Schüttungen größere Gasdurchflussmengen, so dass höhere Reaktionsraten als im Falle vermischter Pulver zu beobachten sind. Das Pelletieren oder Granulieren kann unter Hinzufügen von bis zu 20% Bindemittel zur Mischung aus Elementverbindung und kohlenstoffhaltigem Material erfolgen. Als Bindemittel geeignet sind allgemein kohlenstoffhaltige Verbindungen, wie beispielsweise Polyvinylalkohol, Polyvinylacetat, Zellulose, Stärke oder Melasse sowie auch elementhaltige Verbindungen.

In einer weiteren Ausführungsform des erfindungsgemäßen Verfahrens wird das elementhaltige Material in flüssiger Form oder als Gas, gegebenenfalls mit erhöhter Temperatur, zu dem festen und mit einem elektromagnetischen Wechselfeld beaufschlagten Kohlenstoff oder kohlenstoffhaltigen Material zugefügt.

In einer weiteren Ausführungsform des erfindungsgemäßen Verfahrens wird das durch ein elektromagnetisches Wechselfeld aufheizbare und kohlenstoffhaltige Material in flüssiger Form oder als Gas, gegebenenfalls mit erhöhter Temperatur, in den Reaktionsraum eingebracht.

In einer weiteren Ausführungsform des erfindungsgemäßen Verfahrens wird zumindest der als Reduktionsmittel dienende Anteil des kohlenstoffhaltigen Materials in flüssiger Form oder als Gas, gegebenenfalls mit erhöhter Temperatur, in den Reaktionsraum eingebracht. Ist im Reaktionsraum bereits Kohlenstoff oder ein kohlenstoffhaltiges Material enthalten, welches sich durch ein elektromagnetisches Wechselfeld erwärmen lässt, so ist es nicht notwendig, dass sich das als Reduktionsmittel eingesetzte flüssige oder gasförmige kohlenstoffhaltige Material ebenfalls durch elektromagnetische Wechselfelder erwärmen lässt.

In einer weiteren Ausführungsform des erfindungsgemäßen Verfahrens wird der eingesetzte Kohlenstoff oder das eingesetzte kohlenstoffhaltige Material innerhalb des Reaktionsraumes durch Einwirkung eines elektromagnetischen Wechselfeldes, wie beispielsweise Mikrowellen, auf das im Reaktionsraum enthaltene Substanzgemisch in eine Form überführt, die sich durch das elektromagnetische Wechselfeld erwärmen lässt.

In Ausführungsformen des erfindungsgemäßen Verfahrens, in denen der Kohlenstoff oder das kohlenstoffhaltige Material nicht nur als Heizelement sondern auch als Reduktionsmittel wirkt und somit während der Reaktion verbraucht wird, ist eine überstöchiometrische Zugabe vorteilhaft.

Das Beaufschlagen der Reaktionsmischung mit einem elektromagnetischen Wechselfeld kann zur Zündung und Stabilisierung eines Plasmas im Reaktionsraum führen.

Das erfindungsgemäße Verfahren kann neben der beschriebenen Ausführung in einem Festbettreaktor auch in Reaktoren mit einer bewegten Schüttung der Reaktionsmischung durchgeführt werden, wie beispielsweise unter Rühren der Schüttung, Bewegen der Schüttung durch Vibration oder Verwendung eines Wirbelschichtverfahrens. Insbesondere sind für einen kontinuierlichen Betrieb Fließbettanordnungen zweckmäßig.

Bei dem erfindungsgemäßen Verfahren erfolgt die Energiezufuhr durch ein elektromagnetisches Wechselfeld, bevorzugt Mikrowellenstrahlung. Die eingestrahlte Leistung hängt von der Geometrie des Reaktors sowie der Menge und Art von Edukten und der gewünschten Temperatur ab. Bei hydrolyseempfindlichen Elementhalogeniden kommen vorzugsweise Temperaturen oberhalb von 800°C zur Anwendung.

Ein weiterer Vorteil des erfindungsgemäßen Verfahrens ist insbesondere darin zu sehen, dass beliebige Elementverbindungen zum Einsatz kommen können, da die Einstrahlung von Mikrowellenenergie den Kohlenstoff des Reaktionsgemisches erhitzt und somit hohe Temperaturen erzielt werden, die mit herkömmlichen Heizquellen, wie beispielsweise Strahlungsheizung, kaum oder nur mit erheblicher thermischer Belastung des Reaktormaterials erzielt werden können. Ebenso wird die schnelle Aufheizrate durch Einstrahlung von Mikrowellenenergie von herkömmlichen Heizquellen, wie beispielsweise Strahlungsheizung, nicht erreicht. Das Erhitzen mittels Mikrowelle ist somit als besonders effizient zu betrachten.

Die Energiezufuhr erfolgt beim erfindungsgemäßen Verfahren zur Herstellung von Siliciumtetrahalogeniden durch ein elektromagnetischen Wechselfeld. Vorzugsweise wird hierbei die Energie mittels Mikrowellen zugeführt, und zwar insbesondere ab 100 W. Besonders bevorzugt wird Mikrowellenenergie von 400 - 900 W zugeführt. Die eingestrahlte Leistung hängt von der Geometrie des Reaktors sowie von der Menge von Edukten ab. Überraschenderweise hat sich gezeigt, dass hierdurch die beobachteten Funkenentladungen zwischen den Kohlenstoff- oder Kohlenstoff enthaltenden Partikeln sehr rasch und heftig sowie dauerhaft initiiert werden können. Vorzugsweise kommen Temperaturen oberhalb von 800°C zur Anwendung.

Das erfindungsgemäße Verfahren kann beliebige SiOₓ-Quellen somit überraschenderweise in einer bevorzugten Ausführungsform katalysatorfrei zu Siliciumhalogeniden umsetzen. Weiterhin ist das erhaltene Endprodukt Siliciumtetrahalogenid vorzugsweise wasserfrei.

Das erfindungsgemäße Verfahren dient vorzugsweise zur Herstellung von Elementchloriden unter Verwendung von Chlor oder Chlorwasserstoff als Reaktionsgase. Mit dem erfindungsgemäßen Verfahren können insbesondere die in der Natur vorkommenden Materialien, wie beispielsweise Wüstensand oder Bauxit, ohne umfangreiche Vorbehandlung eingesetzt werden, so dass sich das erfindungsgemäße Verfahren neben seiner Vielseitigkeit auch durch ein einfaches Handling und geringe Kosten auszeichnet.

Das erfindungsgemäße Verfahren dient in einer besonders bevorzugten Ausführung zur Herstellung von Siliciumtetrachlorid unter Verwendung von Cl₂ oder HCl als Reaktionsgase. Mit diesem erfindungsgemäßen Verfahren können insbesondere die in der Natur vorkommenden SiOₓ-enthaltenden Materialien (Wüstensand etc.) ohne umfangreiche Vorbehandlung eingesetzt werden, so dass sich das erfindungsgemäße Verfahren neben seiner Vielseitigkeit auch durch ein einfaches Handling und geringe Kosten auszeichnet.

Erfindungsgemäß können SiOₓ-Quellen ausgewählt aus der Gruppe enthaltend hochdisperse Kieselsäure, vorzugsweise mit einer Oberfläche von mindestens 50 m²/g bevorzugt von mindestens 250 m²/g gemessen mit der BET-Methode, Quarzfeinmehl vorzugsweise aufweisend eine mittlere Teilchengröße von mindestens 0,1 µm, bevorzugt von mindestens 1 µm und vorzugsweise aufweisend eine theoretische spezifische Oberfläche von mindestens 0,1 m²/g, bevorzugt 0,5 m²/g, Quarzsand mit einer mittleren Teilchengröße von mindestens 0,005 mm, bevorzugt 0,1 mm und einer theoretischen spezifischen Oberfläche von mindestens 10 cm²/g, bevorzugt 50 cm²/g, Wüstensand vorzugsweise aufweisend eine Teilchengröße 0,001 bis 1 mm, Flaschenglas, wie beispielsweise Kalk-Soda-Glas, vorzugsweise zerstoßen oder gemahlen, Quarzglas, Glimmer und SiO-Pulver vorzugsweise mit einer Teilchengröße 0,01 µm bis 0,1 mm.

Die Erfindung wird nachfolgend anhand von technisch relevanten Ausführungsbeispielen beschrieben. Es wurden insbesondere Element-Sauerstoffkombinationen eingesetzt, die über eine hohe Element-Sauerstoff-Bindungsenthalpie verfügen. Diese sind in Tabelle 3 aufgeführt.

**Tabelle 3 verfügen.**

| **Element** | **Bindungsenthalpie [kJ/mol]** |
|---|---|
| Al | 512 |
| B | 808 |
| Si | 800 |
| Ti | 672 |
| Hf | 802 |
| P | 600 |

### Beispiele

### Beispiel 1

Die verwendeten Apparaturen und Reaktionsunterlagen bestehen aufgrund der Verfügbarkeit und Temperaturbeständigkeit aus Quarzglas. Dieses wird unter den Reaktionsbedingungen angegriffen. Um die Glasapparatur vor Reaktion und thermischer Belastung zu schützen, wurden die Reaktanden auf Quarzglasträgern bestehend aus einem mittig aufgeschnittenen Quarzrohr, das mit Füßen versehen wurde, in den Reaktor eingebracht. Die Reaktionsgeschwindigkeit der Reaktoraußenwand ist daher durch die geringe Oberfläche und wesentlich niedrigere Temperatur im Vergleich zu den gepulverten oder körnigen Reaktionsgemischen deutlich herabgesetzt, so dass eine Zerstörung der Reaktoraußenwand während einer einzelnen Reaktion nicht beobachtet wurde.

Auf einen Quarzglasträger (halbiertes Quarzglasrohr, Durchmesser 13 mm, Länge ca. 100 mm, Füße aus Quarzglas 5 mm) wurden 1 - 1,5 g einer Mischung der aufgeführten Materialien mit den ebenfalls aufgeführten kohlenstoffhaltigen Materialien gegeben. Der Quarzglasträger wurde in ein Reaktionsrohr (Quarzglasrohr, Durchmesser 30 mm, Länge 550 mm) eingeführt, welches in den Hotspot eines Mikrowellenreaktors (MX 4000; MUEGGE Electronic GmbH) eingebracht wurde. Durch das Reaktionsrohr wurde ein Cl₂- oder HCl-Gasstrom (1 - 5 L/min) unter Erhitzen (550 - 1300°C) durch Aktivierung des Mikrowellenreaktors geleitet. Unter Normalbedingungen flüssige oder gasförmige Reaktionsprodukte wurden in einer Kühlfalle, in der Pentan vorgelegt war, mit einem Ethanol-Kältebad bei weniger als -30°C auskondensiert. Die Reaktionsdauer betrug jeweils etwa 10 Minuten.

In diesem Versuchsaufbau wurden nachfolgende Elementhaltige Verbindungen mit Kohlenstoffhaltigen Verbindungen ausgewählt aus der Gruppe enthaltend Aktivkohle (reinst, ~ 2,5 mm), Aktivkohle (reinst, Pulver), Graphit (reinst), Steinkohle (Deutsche Steinkohle), Braunkohle (RWE Powers) und Petrokoks (OMV) umgesetzt:

### Elementhaltige Verbindungen:

Aluminium(III)oxid; <150µm, 99%
Bor(III)oxid; reinst, ≥99,98%
Eisen(III)oxid; 5µm, ≥99%
Hafnium (IV) oxid; 98%
Glimmerblättchen
Siliciumcarbid; 37µm
Hochdisperse Kieselsäure (380 m²/g)
Quarzfeinmehl (mittlere Teilchengröße 3 µm, theoretische spezifische Oberfläche 0,75 m²/g)
Quarzsand (mittlere Teilchengröße 0,32 mm, theoretische spezifische Oberfläche 75 cm²/g)
Wüstensand; (Sahara, Koordinaten N23° 27.419; E 009° 01.489,
Teilchengröße < 0,5 mm)
zerstoßene braune Mehrweg-Getränkeflasche (Braunglas)
zerstoßene Pasteurpipetten (Kalk-Soda-Glas)
Japanische Reisasche
Katalysator auf der Basis von Zeolith
Siliciumnitrid; Si₃N₄, 44 µm
Siliciummonoxid; ≤ 44 µm
Titandioxid; ≥ 99,8%;
Tricalciumphosphat; 35-40% Ca;

Siliciumtetrachlorid wurde mittels GCMS und ²⁹Si NMR im Vergleich zu gekauften Standardverbindungen nachgewiesen. Bortrichlorid als Diethyletheraddukt und Phosphortrichlorid wurden mittels 11B NMR und ³¹P NMR gegen gekaufte Standardverbindungen nachgewiesen. Eisendichlorid, Aluminiumtrichlorid und Hafniumtetrachlorid wurden mittels EDX und Röntgenpulverdiffraktometrie nachgewiesen. Titantetrachlorid konnte mit der zur Verfügung stehenden Laborausrüstung nicht direkt nachgewiesen werden. Die stark rauchende Pentan-Lösung wurde in GC-Vials überführt. Nach dem Absetzen des entstandenen Niederschlags wurde die überstehende klare Lösung durch das Septum abgehoben und in ein neues Vial durch das Septum überführt. Diese klare Lösung wurde durch das Septum hindurch mit Wasser versetzt. Es entstand sofort ein weißer voluminöser Niederschlag. Dieser wurde eingetrocknet und mittels EDX als Titanoxid identifiziert.

### Beispiel 2

Auf einen Quarzglasträger (halbiertes Quarzglasrohr, Durchmesser 13 mm, Länge ca. 100 mm, Füße aus Quarzglas 5 mm) wurden 1 - 1,5 g eines SiO₂/C-Gemisches bestehend aus Wüstensand mit einer Korngröße von maximal 0,5 mm und Aktivkohle mit einer Korngröße von 2 - 2,5 mm im Verhältnis von 1:4 gegeben. Der Quarzglasträger wurde in ein Reaktionsrohr (Glasrohr, Durchmesser 30 mm mit zwei Schornsteinen, Fallrohr plus Steigrohr, mittlerer Abstand 100 mm) eingeführt, welches in den Hotspot eines Mikrowellenreaktors (Panasonic Haushaltsgerät) eingebracht wurde. Durch das Reaktionsrohr wurde ein mit Argon verdünnter Chlorgasstrom (Chlor 40 1/h, Ar 10 1/h) geleitet. Nach Erhitzen durch Aktivierung des Mikrowellengerätes wurde das Reaktionsprodukt in einer Kühlfalle, in der Pentan vorgelegt war, mit einem Ethanol-Kältebad bei unter -30°C auskondensiert. Die Analytik erfolgte quantitativ und qualitativ. Bei dem erhaltenen Reaktionsprodukt handelt es sich um SiCl₄. In einer Reaktionszeit von 15 - 20 Minuten ließen sich 50 - 60% des Wüstensandes umsetzen, wobei die Berechnung durch Gewichtsdifferenz der Probe nach der Reaktion SiO₂ + 2 C + 2 Cl₂ → SiCl₄ + 2 CO erfolgte. Die Experimente wurden abgebrochen, wenn nach weiteren 5 Minuten Bestrahlung keine weitere Massenabnahme zu beobachten war. Unter Berücksichtigung des SiO₂-Gehaltes im verwendeten Sand von ca. 80% und des Einflusses des Boudouard-Gleichgewichtes mit der Bildung von CO₂ und C aus CO erhöht sich der tatsächliche SiO₂-Umsatz entsprechend. Bezogen auf die SiOₓ-Quelle konnte daher eine weitgehend quantitative Ausbeute erhalten werden.

### Beispiel 3

Durch den in Beispiel 1 beschriebenen Versuchsaufbau wurde ein Gemisch von Chlorwasserstoff (60 L/h) und Stickstoff (40 L/h) geleitet. In einer Reaktionszeit von 15 - 20 Minuten ließen sich 50 - 60% des Wüstensandes umsetzen, wobei die Berechnung durch Gewichtsdifferenz der Probe nach der Reaktion SiO₂ + 2 C + 2 Cl₂ → SiCl₄ + 2 CO erfolgte. Die Experimente wurden abgebrochen, wenn nach weiteren 5 Minuten Bestrahlung keine weitere Massenabnahme zu beobachten war. Unter Berücksichtigung des SiO₂-Gehaltes in Sand von ca. 80% und des Einflusses des Boudouard-Gleichgewichtes mit der Bildung von CO₂ und C aus CO erhöht sich der tatsächliche SiO₂-Umsatz entsprechend. Bezogen auf die SiOₓ-Quelle konnte daher eine nahezu quantitative Ausbeute erhalten werden.

### Beispiel 4

Durch den in Beispiel 1 beschriebenen Versuchsaufbau wird nun ein Gemisch von Chlorwasserstoff (20 L/h) und Wasserstoff (20 L/h) geleitet. Das isolierte Produkt enthält neben SiCl₄ auch HSiCl₃.

## Patentansprüche

1. Verfahren zur Herstellung von Elementhalogenid, **dadurch gekennzeichnet, dass** eine Mischung eines Materials enthaltend das Element mit Kohlenstoff oder kohlenstoffhaltigem Material unter Erwärmen mittels Einwirkung eines elektromagnetischen Wechselfeldes mit einem Gasstrom enthaltend unter den Reaktionsbedingungen gasförmiges Halogen oder eine gasförmige Halogenverbindung oder deren Gemischen in Kontakt gebracht wird.

2. Verfahren gemäß Anspruch 1, **dadurch gekennzeichnet, dass** pulverförmige Materialien enthaltend das entsprechende Element verwendet werden.

3. Verfahren gemäß Anspruch 1 oder 2, **dadurch gekennzeichnet, dass** der Kohlenstoff oder das kohlenstoffhaltige Material in Granulatform oder Pulverform verwendet wird.

4. Verfahren gemäß einem der Ansprüche 1 oder 3, **dadurch gekennzeichnet, dass** das elementhaltige Material in flüssiger Form oder als Gas in den Reaktionsraum eingebracht wird.

5. Verfahren gemäß einem der Ansprüche 1, 2 oder 4, **dadurch gekennzeichnet, dass** das Kohlenstoff enthaltende Material in flüssiger Form oder als Gas in den Reaktionsraum eingebracht wird.

6. Verfahren gemäß einem der Ansprüche 1 bis 5, **dadurch gekennzeichnet, dass** das eingesetzte elektromagnetische Wechselfeld durch Mikrowellenstrahlung erzeugt wird.

7. Verfahren gemäß einem der Ansprüche 1 bis 6, **dadurch gekennzeichnet, dass** der verwendete Kohlenstoff oder das kohlenstoffhaltige Material durch das elektromagnetische Wechselfeld erwärmt wird.

8. Verfahren gemäß einem der Ansprüche 1 bis 7, **dadurch gekennzeichnet, dass** der Kohlenstoff oder das kohlenstoffhaltige Material durch Einwirkung eines elektromagnetischen Wechselfeldes auf die im Reaktionsraum befindliche Substanzmischung in eine durch das elektromagnetische Wechselfeld aufheizbare Form überführt wird.

9. Verfahren gemäß einem der Ansprüche 1 bis 8, **dadurch gekennzeichnet, dass** das unter Reaktionsbedingungen gasförmige Halogen, die gasförmige Halogenverbindung oder deren Gemische zusammen mit einem Trägergas eingesetzt werden.

10. Verfahren gemäß einem der Ansprüche 1 bis 9, **dadurch gekennzeichnet, dass** als halogenhaltige Verbindungen fluorhaltige oder chlorhaltige Verbindungen eingesetzt werden.

11. Verfahren gemäß einem der Ansprüche 1 bis 10, **dadurch gekennzeichnet, dass** Chlor als gasförmiges Halogen oder Chlorwasserstoff als gasförmige Halogenverbindung verwendet wird.

12. Verfahren gemäß einem der Ansprüche 1 bis 11, **dadurch gekennzeichnet, dass** beliebige das entsprechende Element enthaltende Verbindungen eingesetzt werden.

13. Verfahren gemäß einem der Ansprüche 1 bis 12, **dadurch gekennzeichnet, dass** das in der eingesetzten Elementverbindung enthaltene Element ein Metall oder ein Nichtmetall ist.

14. Verfahren gemäß einem der Ansprüche 1 bis 13, **dadurch gekennzeichnet, dass** die das Element enthaltende Verbindung im Gemisch mit weiteren Materialien vorliegt.

15. Verfahren gemäß einem der Ansprüche 1 bis 14, **dadurch gekennzeichnet, dass** der eingesetzte Kohlenstoff oder das kohlenstoffhaltige Material während der Erzeugung des Elementhalogenids zumindest teilweise zu nicht durch das elektromagnetische Wechselfeld anregbare Kohlenstoffverbindungen abreagiert.

16. Verfahren gemäß einem der Ansprüche 1 bis 15, **dadurch gekennzeichnet, dass** während der Darstellung von hydrolyseempfindlichem Elementhalogenid das Gemisch auf mehr als 700°C erhitzt wird.

17. Verfahren gemäß einem der Ansprüche 1 bis 16, **dadurch gekennzeichnet, dass** als elementhaltiges Material ein natürlich vorkommender Rohstoff eingesetzt wird.

18. Verfahren gemäß einem der Ansprüche 1 bis 17, **dadurch gekennzeichnet, dass** als Material enthaltend das Element ein Nebenprodukt oder ein Abfallprodukt eines technischen Produktionsprozesses eingesetzt wird.

19. Verfahren gemäß einem der Ansprüche 1 bis 18, **dadurch gekennzeichnet, dass** das elementhaltige Material Reinigungsschritten oder Schritten zur Aufkonzentration des Elementes unterzogen wird, bevor es im erfindungsgemäßen Verfahren eingesetzt wird.

20. Verfahren gemäß einem der Ansprüche 1 bis 19, **dadurch gekennzeichnet, dass** als elementhaltige Material Materialien enthaltend SiOₓ, wobei x eine Zahl von 1 bis 2 sein kann, verwendet wird.

21. Verfahren gemäß Anspruch 20, **dadurch gekennzeichnet, dass** Mikrowellenenergie von 100 bis 900 W zugeführt wird.

22. Verfahren nach Anspruch 20 oder 21, **dadurch gekennzeichnet, dass** dem Reaktionsgas zusätzlich Wasserstoff zugeleitet wird.

23. Verfahren gemäß einem der Ansprüche 20 bis 22, **dadurch gekennzeichnet, dass** Chlorwasserstoff als gasförmige Halogenverbindung verwendet wird.

24. Verfahren nach einem der Ansprüche 20 bis 23, **dadurch gekennzeichnet, dass** als Siliciumoxid SiOₓ enthaltendes Material beliebige Siliciumoxidquellen eingesetzt werden

25. Verfahren nach Anspruch 24, **dadurch gekennzeichnet, dass** als Siliciumoxidquelle Wüstensand verwendet wird.

## Claims

1. Process for preparing element halide, **characterized in that** it comprises bringing a mixture of a material containing the element with carbon or a carbon-containing material into contact with a gas stream containing halogen which is gaseous under the reaction conditions or a gaseous halogen compound or a mixture thereof while heating by means of the action of an electromagnetic alternating field.

2. Process according to Claim 1, **characterized in that** pulverulent materials containing the respective element are used.

3. Process according to Claim 1 or 2, **characterized in that** the carbon or the carbon-containing material is used in granular form or powder form.

4. Process according to either Claim 1, or 3, **characterized in that** the element-containing material is introduced into the reaction space in liquid form or as gas.

5. Process according to any of Claims 1, 2 or 4, **characterized in that** the carbon-containing material is introduced into the reaction space in liquid form or as gas.

6. Process according to any of Claims 1 to 5, **characterized in that** the electromagnetic alternating field used is generated by means of microwave radiation.

7. Process according to any of Claims 1 to 6, **characterized in that** the carbon used or the carbon-containing material is heated by means of the electromagnetic alternating field.

8. Process according to any of Claims 1 to 7, **characterized in that** the carbon or the carbon-containing material is converted by action of an electromagnetic alternating field on the substance mixture present in the reaction space into a form which can be heated by means of the electromagnetic alternating field.

9. Process according to any of Claims 1 to 8,
**characterized in that** the halogen which is gaseous under reaction conditions, the gaseous halogen compound or the mixture thereof is used together with a carrier gas.

10. Process according to any of Claims 1 to 9, **characterized in that** fluorine-containing or chlorine-containing compounds are used as halogen-containing compounds.

11. Process according to any of Claims 1 to 10, **characterized in that** chlorine is used as gaseous halogen or hydrogen chloride is used as gaseous halogen compound.

12. process according to any of Claims 1 to 11, **characterized in that** any compounds containing the respective element are used.

13. Process according to any of Claims 1 to 12, **characterized in that** the element present in the element compound used is a metal or a nonmetal.

14. Process according to any of Claims 1 to 13, **characterized in that** the compound containing the element is present in admixture with further materials.

15. Process according to any of Claims 1 to 14, **characterized in that** the carbon used or the carbon-containing material is converted at least partly into carbon compounds which cannot be excited by the electromagnetic alternating field during the production of the element halide.

16. Process according to any of Claims 1 to 15, **characterized in that** the mixture is heated to about 700°C during the preparation of a hydrolysis-sensitive element halide.

17. Process according to any of Claims 1 to 16, **characterized in that** a naturally occurring raw material is used as element-containing material.

18. Process according to any of Claims 1 to 17, **characterized in that** a by-product or a waste product of an industrial production process is used as material containing the element.

19. Process according to any of Claims 1 to 18, **characterized in that** the element-containing material is subjected to purification steps or steps to increase the concentration of the element before it is used in the process of the invention.

20. Process according to any of Claims 1 to 19, **characterized in that** materials containing SiOₓ, where x can be from 1 to 2, are used as element-containing material.

21. Process according to Claim 20, **characterized in that** microwave energy at from 100 to 900 W is introduced.

22. Process according to Claim 20 or 21, **characterized in that** hydrogen is additionally fed into the reaction gas.

23. Process according to any of Claims 20 to 22, **characterized in that** hydrogen chloride is used as gaseous halogen compound.

24. Process according to any of Claims 20 to 23, **characterized in that** any silicon oxide sources are used as material containing silicon oxide SiOₓ.

25. Process according to Claim 24, **characterized in that** desert sand is used as silicon oxide source.

## Revendications

1. Procédé de préparation d'halogénure de corps simple, **caractérisé en ce qu'**un mélange d'un matériau contenant le corps simple avec du carbone ou un matériau contenant du carbone est mis en contact avec un courant de gaz contenant dans les conditions réactionnelles de l'halogène sous forme gazeuse ou un composé d'halogène sous forme gazeuse ou leurs mélanges, avec chauffage grâce à l'action d'un champ alternatif électromagnétique.

2. Procédé selon la revendication 1, **caractérisé en ce que** des matériaux sous forme de poudre contenant le corps simple correspondant sont utilisés.

3. Procédé selon la revendication 1 ou 2, **caractérisé en ce que** le carbone ou le matériau contenant du carbone est utilisé sous forme de granulé ou sous forme de poudre.

4. Procédé selon la revendication 1 ou 3, **caractérisé en ce que** le matériau contenant le corps simple est introduit dans l'espace réactionnel sous forme liquide ou en tant que gaz.

5. Procédé selon l'une quelconque des revendications 1, 2 ou 4, **caractérisé en ce que** le matériau contenant du carbone est introduit dans l'espace réactionnel sous forme liquide ou en tant que gaz.

6. Procédé selon l'une quelconque des revendications 1 à 5, **caractérisé en ce que** le champ alternatif électromagnétique utilisé est produit par un rayonnement micro-onde.

7. Procédé selon l'une quelconque des revendications 1 à 6, **caractérisé en ce que** le carbone, ou le matériau contenant du carbone, utilisé est chauffé grâce au champ alternatif électromagnétique.

8. Procédé selon l'une quelconque des revendications 1 à 7, **caractérisé en ce que** le carbone ou le matériau contenant du carbone est converti grâce à l'action d'un champ alternatif électromagnétique sur le mélange de substances se trouvant dans l'espace réactionnel sous une forme pouvant être chauffée grâce au champ alternatif électromagnétique.

9. Procédé selon l'une quelconque des revendications 1 à 8, **caractérisé en ce que** l'halogène sous forme gazeuse dans les conditions réactionnelles, le composé d'halogène sous forme gazeuse ou leurs mélanges, sont utilisés en commun avec un gaz porteur.

10. Procédé selon l'une quelconque des revendications 1 à 9, **caractérisé en ce que** des composés contenant du fluor ou contenant du chlore sont utilisés en tant que composés contenant de l'halogène.

11. Procédé selon l'une quelconque des revendications 1 à 10, **caractérisé en ce que** du chlore est utilisé en tant qu'halogène sous forme gazeuse ou du gaz chlorhydrique est utilisé en tant que composé d'halogène sous forme gazeuse.

12. Procédé selon l'une quelconque des revendications 1 à 11, **caractérisé en ce que** n'importe quels composés contenant le corps simple correspondant sont utilisés.

13. Procédé selon l'une quelconque des revendications 1 à 12, **caractérisé en ce que** le corps simple contenu dans le composé de corps simple utilisé est un métal ou un non-métal.

14. Procédé selon l'une quelconque des revendications 1 à 13, **caractérisé en ce que** le composé contenant le corps simple est présent en mélange avec d'autres matériaux.

15. Procédé selon l'une quelconque des revendications 1 à 14, **caractérisé en ce que** le carbone, ou le matériau contenant du carbone, utilisé sont éliminés par réaction au moins partiellement pendant la production de l'halogénure de corps simple pour donner des composés de carbone ne pouvant pas être excités par le champ alternatif électromagnétique.

16. Procédé selon l'une quelconque des revendications 1 à 15, **caractérisé en ce que** le mélange est chauffé à plus de 700 °C pendant la préparation de l'halogénure de corps simple sensible à l'hydrolyse.

17. Procédé selon l'une quelconque des revendications 1 à 16, **caractérisé en ce qu'**une matière première naturelle est utilisée en tant que matériau contenant un corps simple.

18. Procédé selon l'une quelconque des revendications 1 à 17, **caractérisé en ce qu'**un sous-produit ou un déchet d'un procédé de production industriel est utilisé en tant que matériau contenant le corps simple.

19. Procédé selon l'une quelconque des revendications 1 à 18, **caractérisé en ce que** le matériau contenant le corps simple est soumis à des étapes de purification, ou à des étapes visant à la concentration du corps simple, avant d'être utilisé dans le procédé selon la présente invention.

20. Procédé selon l'une quelconque des revendications 1 à 19, **caractérisé en ce qu'**un matériau contenant SiOₓ, x pouvant être un nombre de 1 à 2, est utilisé en tant que matériau contenant un corps simple.

21. Procédé selon la revendication 20, **caractérisé en ce que** de l'énergie micro-onde entre 100 et 900 W est apportée.

22. Procédé selon la revendication 20 ou 21,
**caractérisé en ce que** de l'hydrogène est amené de manière supplémentaire au gaz réactionnel.

23. Procédé selon l'une quelconque des revendications 20 à 22, **caractérisé en ce que** du gaz chlorhydrique est utilisé en tant que composé d'halogène sous forme gazeuse.

24. Procédé selon l'une quelconque des revendications 20 à 23, **caractérisé en ce que** des sources d'oxyde de silicium quelconques sont utilisées en tant que matériau contenant de l'oxyde de silicium SiOₓ.

25. Procédé selon la revendication 24, **caractérisé en ce que** du sable du désert est utilisé en tant que source d'oxyde de silicium.
